**Europäisches Patentamt**

**European Patent Office**

**Office européen des brevets**

(19)

(11) Publication number. **0 010 447**
**A1**

(12) # EUROPEAN PATENT APPLICATION

(21) Application number: **79302300.3**

(22) Date of filing: **22.10.79**

(51) Int. Cl.³: **A 23 J 1/12**
**C 13 L 1/00**

(30) Priority: **25.10.78 GB 4189778**
**08.02.79 GB 7904490**

(43) Date of publication of application:
**30.04.80 Bulletin 80/9**

(84) Designated Contracting States:
**DE FR GB NL**

(71) Applicant: Barr & Murphy International Limited
1 Dorset Square
London NW1 6PU(GB)

(72) Inventor. Barr, Derek Julian
Wifflescombe 1, Vineyard Hill Road
Wimbledon London SW19 7JL(GB)

(72) Inventor: Zwitserloot, William Reinier Maria
Gagelveld 11
Milsbeek(NL)

(74) Representative: Pennant, Pyers et al,
Stevens, Hewlett & Perkins 5 Quality Court Chancery
Lane
London, WC2A 1HZ(GB)

(54) Method of separating wheat gluten and starch from wheat flour.

(57) Wheat gluten and starch are separated from wheat flour by mixing the flour with from 0.6 to 1.0 part water per part flour, maturing the mixture to form a dough and to hydrate the gluten, diluting the dough with a further 0.5 to 3 parts water, and either simultaneously or subsequently applying shear to the dough, e.g. by agitation or extrusion, whereby the gluten coagulates and thereafter separating the starch and gluten. The starch/gluten may be separated by screening, in a decanter, or using hydrocyclones. The method is applicable to whole wheat meal as well as to refined and partly refined flour.

EP 0 010 447 A1

-1-

## "METHOD OF SEPARATING WHEAT GLUTEN AND STARCH FROM WHEAT FLOUR"

This invention relates to a method for the separation of wheat gluten from wheat flour.

The separation of wheat gluten from wheat flour is carried out in several well known ways, using doughs, in which the amount of water is equal to or less than the amount of flour, and batters, in which the amount of water is greater than the amount of flour to produce a free-flowing mixture.

In the traditional Martin process, wheat flour and water are mixed into a dough and the starch is extracted from the dough by washing.

In the continuous batter process, a free flowing mixture of wheat flour and water is produced, the so-called batter. After a certain retention time the starch is washed from the gluten by passing the batter to pumps, supplying substantial amounts of water to each pump at the same time. The gluten is then separated by sieving. In a variant of this process, a starch fraction and protein concentrate are separated from a batter by centrifugal force. The gluten is not isolated from the liquid protein concentrate but this is dried as a whole. It is however possible to agglomerate the gluten in the protein concentrate by agglomeration at a suitable temperature with strong agitation.

The gluten agglomerates can be separated from the liquid protein concentrate by screening.

In another variant of the batter process, a batter is prepared from at least 1.5 parts of water and 1 part of wheat flour. This batter is then pumped straight into a hydrocyclone battery wherein the gluten spontaneously agglomerates and starch gluten separation takes place in one step. The gluten leaves the hydrocyclone battery with part of the starch in the overflow, whilst the bulk of the starch leaves in the underflow. The agglomeration and separation takes place at a suitable temperature of 30 to 50°C.

The use of hydrocyclones, and the connection of them in series for separation of starch and undesirable materials is well known.

According to the present invention, a method is provided where the agglomeration of gluten is achieved by dilution of a fully developed dough and simultaneous or subsequent application of shear. The present invention accordingly provides a method of separating starch and gluten from wheat flour comprising the steps of producing a mixture of water and flour containing 0.6 - 1.0 part by weight of water per part by weight of flour; maturing this mixture into a dough by allowing the gluten to hydrate fully; subsequently diluting this dough with 0.5 to 3 parts by weight of water per part by weight of flour and either simultaneously or subsequently applying shear to the mixture whereby the gluten agglomerates and subsequently separating the starch and gluten.

Agglomeration of the gluten in the dough is an important step in the invention. When flour and water are mixed the gluten is dispersed in the water added to the flour to make a batter or dough. Thus, in a diluted dough, formed in an intermediate stage of the present invention, which has not been subject to shear, the gluten, in hydrated form, is dispersed colloidally in the water. In this context the term "agglomeration" means the joining together of the colloidal gluten particles to form substantially larger pieces, which we refer to herein as "agglomerates". The agglomerates are no longer in colloidal form and can be separated from the diluted dough e.g. by filtration, screening or by virtue of the density difference between the gluten agglomerates and the surrounding suspension of the starch in the water. Suitable techniques for effecting this separation are described in more detail below.

The separation of gluten and starch after the agglomeration is facilitated in this method significantly and a considerable reduction of the total quantity of fresh water required for the separation is achieved. The gluten agglomerates can be separated from the starch milk in several different ways, straight from the gluten-starch milk, or after the bulk of the starch has been separated from the gluten-starch liquid. The gluten agglomerates are conveniently separated by screening. The gluten agglomeration and separation can be carried out using any type of wheat flour, whether made from hard or soft wheat, including whole meal flour.

In the method of the invention wheat flour is mixed with fresh water or process water in an amoun of 0.6 - 1 part of water to 1 part of wheat flour. The precise amount of water depends upon the quality of wheat flour.

A water temperature of 40-50$^{o}$C has been found to promote the hydration of gluten and to reduce the retention time i.e. the time, typically in the range 10 to 20 minutes for which the dough is allowed to stand, after mixing, in order to develop it fully by hydration of the gluten. The prepared dough is kept in a holding tank for the retention time, the length of which depends upon the dough water temperature and the wheat (flour) quality.

After the gluten is hydrated, the dough is diluted with water at a rate of 0.5 to 3 more usually 0.5 to 1.5 parts by weight of water per part by weight of flour and either simultaneously or as soon as possi subsequently shear is applied, e.g. by heavy agitating and/or pumping the dough water mix through a narrow orifice.

By this dilution plus shear action, the gluten agglomerates and appears as small threads and lumps. The agglomerated gluten can be separated from the gluten-starch liquor in several ways, and at different stages of the further process.

It is possible to separate gluten starch milk by direct screening, using a rotating screen or a static screen with mesh sizes typically of 10 to 80 U.S. standard mesh (equivalent to a particle size range of from 2 to 1.77 mm). Water is added to clean the coagulated wet gluten, to increase the protein content and to dilute the starch milk in order to improve the screening. A better method, using less water, is to pump the gluten water mixture into a decanting centrifuge (decanter) or hydrocyclone, wherein the main amount of starch is separated. This facilitates the screening of the gluten from the remaining starch milk. The gluten leaves the decanter or hydrocyclones with the overflow and is screened further, washed, and dried. The liquid passing through the gluten screens contains some starch, all the pentosans, damaged starch, and solubles. The remaining prime starch is recovered in a further stage of hydrocyclones, and then the remainder of the stream is concentrated, typically in separators and decanters. The starch, with the bulk of the fibre, leaves in the underflow, where the fibre can easily be removed by screening. The starch is washed by introducing fresh water in the last hydrocyclone stage or decanter concentrate, which is further concentrated afterwards.

It is not necessary to increase the temperature of the upper section of the hydrocyclones, since the cyclones are only used for starch separation and washing, which is usually done with unheated water or wash water of maximum $30^{\circ}C$. pH adjustment of the batter or starch-gluten mix is not needed.

Addition of chemicals to improve hydration of the gluten is also not necessary.

The accompanying drawings illustrate embodiments of the invention; Figures 1 and 2 particularly illustrating preparation and shearing of the dough and Figures 3 and 4 separation of the gluten and starch.

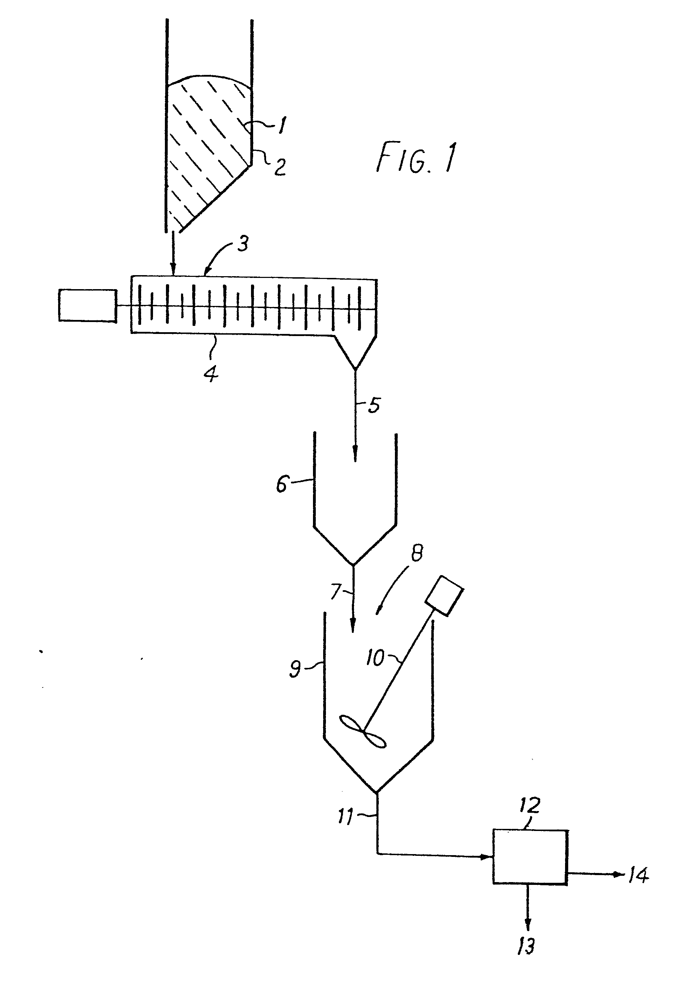

In Figure 1, wheat flour 1 from silo 2 is mixed with fresh water 3, typically at 40 to 50°C, in mixer 4. The undeveloped dough 5 is introduced into holding tank 6 to develop it fully. The developed dough 7 is passed to stirring tank 8 where it is agitated with fresh water 9, typically at 15 to 30°C, by propeller type stirrer 10. After sufficient agitation to coagulate the gluten the mixture 11 is passed to suitable separators 12 which may be screens, decanters or hydrocyclones in which the starch 13 and gluten 14 are separated.

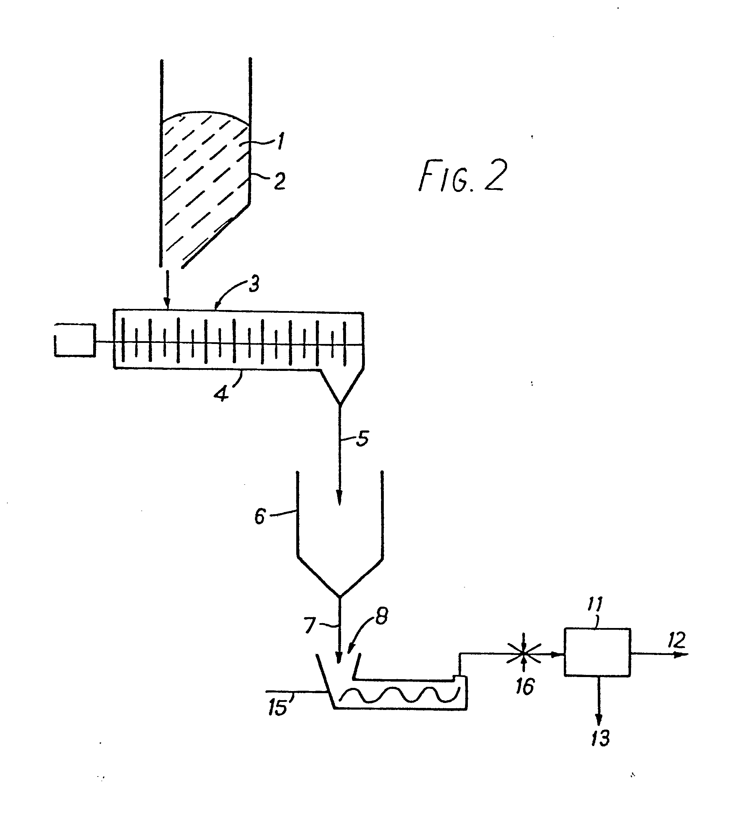

In the embodiment illustrated in Figure 2 the flour is treated as described for Figure 1 up to the developed dough. The developed dough 7 and the fresh water 8 are mixed in mono pump 15 and then pumped through orifice 16, e.g. of 2 mm aperture. The gluten and starch are subsequently recovered as in Figure 1.

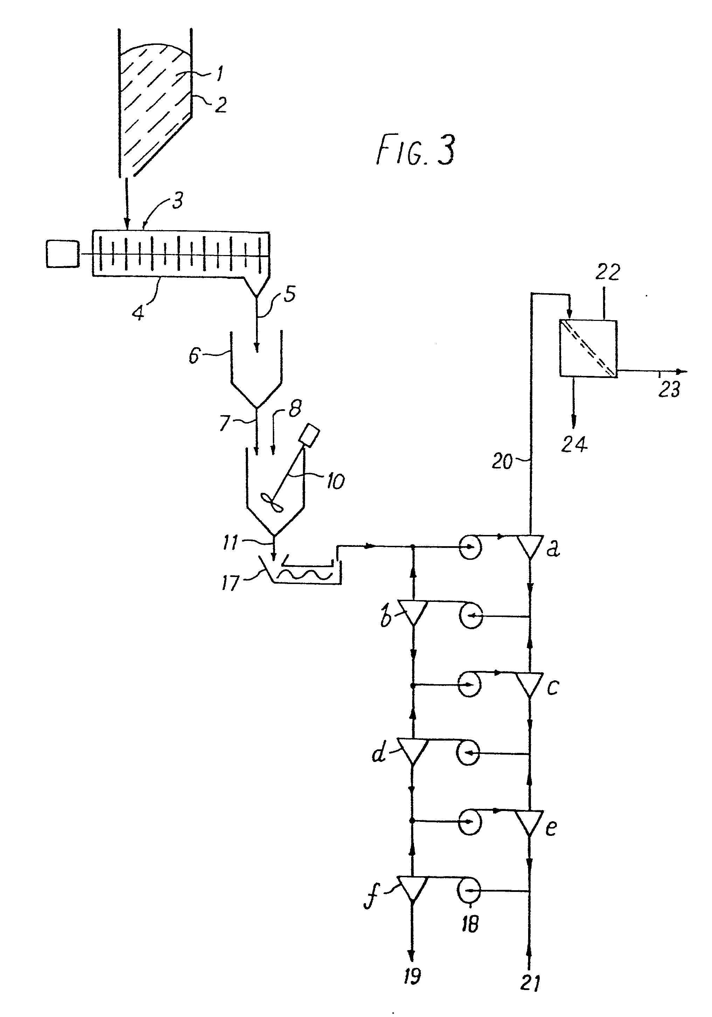

In Figure 3, flour is processed as described for Figure 1 up to the exit from tank 9. The diluted and stirred (sheared) dough 11 is pumped by mono pump 17 to the first stage (a) of six stage hydrocyclone unit 18 (the stages are labelled a to f). The bulk of the prime starch is obtained in the underflow 19 of stage f and the gluten together with remaining starch is obtained at the overflow 20 of stage a. Wash water 21, in amount preferably not exceeding 2 parts per part of flour and preferably at a temperature not exceeding 30°C, is introduced into stage f of the hydrocyclone.

The gluten containing overflow 20 from stage a is passed to screen 22. The gluten 23 is retained on the screen and can be further washed if necessary prior to drying. The liquid passing through the screen generally includes some prime starch and starch solubles and pentosans.

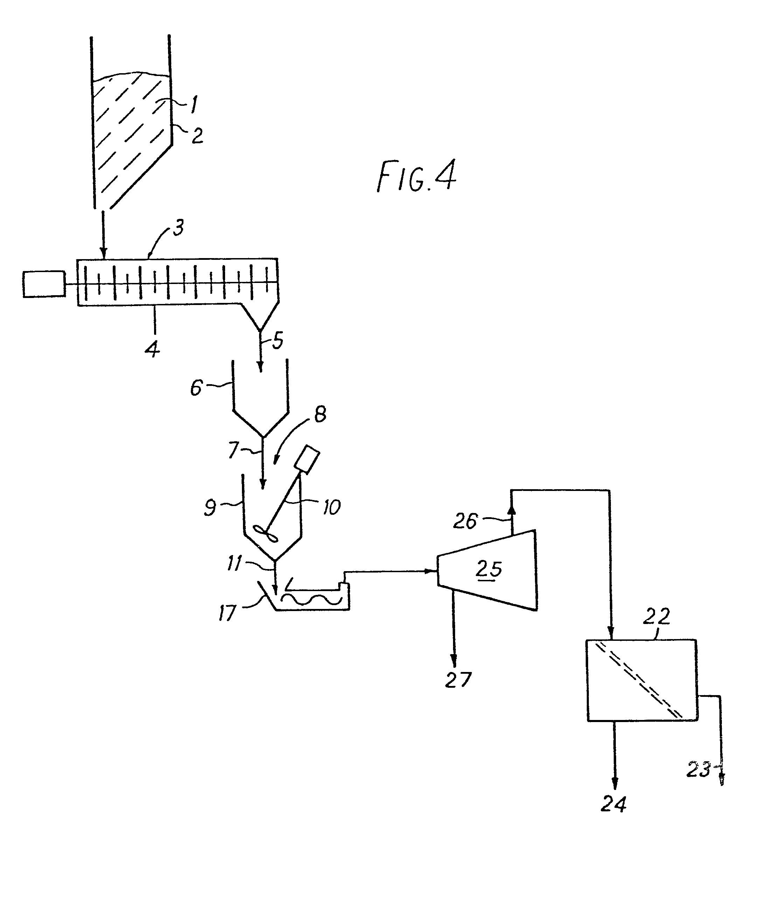

In Figure 4, flour is processed as described for Figure 3 up to the exit from mono pump 17, from which, in this embodiment, the diluted and sheared dough is passed to decanting centrifuge 25. Gluten and starch containing fractions are separated, the gluten being primarily in the overflow 26 and the prime starch in the underflow 27. The gluten-containing overflow is screened in screen 22 as described for Figure 3. The underflow generally includes the bulk of the fibre which can be separated from the prime starch by screening.

Some Examples of methods according to the invention will now be described with reference to the accompanying drawings in which Figures 1 to 4 are related to Examples 1 to 4 respectively. All parts and percentages are by weight unless otherwise specified.

EXAMPLE 1

Wheat flour from silo 1 was mixed with fresh water at 40°C in mixer 4. The water to flour weight ratio was 0.8 to 1. This dough was introduced into a holding tank 6, where it was held for 10 minutes to develop it fully.

After 10 minutes the dough was introduced into stirring tank 9 where it was agitated with a propeller type stirrer 10 with addition of 1 part of fresh water per 1 part of flour to dilute it. The water temperature was 20°C. The gluten threads and lumps which become visible were screened from the diluted dough, to give a protein yield of 82%.

$$\text{Protein yield \%} = \frac{\text{protein in gluten} \times \text{gluten content} \times 100}{\text{protein in flour}}$$

EXAMPLE 2

A developed dough such as that from tank 6 in Example 1 was diluted in a mono pump 15 and pumped through a 2 mm orifice 16. The dough was diluted with 0.8 part of water per part of flour in the feed hopper of the mono pump. After screening the gluten, the same yield as in Example 1 was obtained.

EXAMPLE 3

A diluted dough such as that obtained in Example 1, at the outlet of tank 9, was sent into the first stage  a  of a 6-stage hydrocyclone unit 18 by mono pump 17. The main amount of prime starch left the cyclones in stage f of the unit. Water of 20°C was introduced into stage f of the unit. The gluten left the cyclones of stage  a  of the unit together with some starch and solubles.

The gluten was separated in screen 22. A protein yield of 82% was also obtained with this method.

The cyclones used were of the Dorr-Oliver 10 mm type, the pressure drop over the cyclones being 4.5 bar.

The wash water used was no more than 2 parts per 1 part of flour.

EXAMPLE 4

The diluted dough leaving tank 9 of Example 1 was pumped into decanter 25 by means of pump 17. The decanter underflow contained the main part of the prime quality starch and the main part of the fibre. The decanter overflow contained the gluten and required screening in screen 22. The liquid passing through screen 22 contained starch, solubles, and pentosans.

Again, a protein yield of 82% was obtained together with improved screening.

In all the above-mentioned Examples the raw material used was flour made from European soft wheat. Similar tests were carried out with flour made from hard American wheat, with equally satisfactory results.

The main advantages of these examples of process according to the invention, are as follows:

The methods providing continuous agglomeration of the gluten of wheat flour, with a minimum amount of shear and simple equipment. This improves the quality of the gluten and results in maximum gluten yield, with minimal soluble protein losses.

The process is carried out at relatively low temperatures and residence time, which results in low bacteriological pollution.

The total amount of water necessary for gluten agglomeration and separation is low.

The total amount of waste water effluent is reduced to a minimum.

It is a particular advantage of the method of the present invention that whole wheat meal (whole meal flour) or incompletely refined flour can be used as the starting material and accordingly these materials are included within the term "wheat flour". Heretofore, separation of gluten from whole wheat meal without prior flour refining has not been carried out on a substantial scale commercially. A number of proposals have been made for the separation of wheat gluten from whole wheat meal but these have involved complex processing and/or equipment and have not proved commercially attractive.

0010447

CLAIMS

1. A method of separating starch and gluten from wheat flour comprising the steps of producing a mixture of water and flour containing 0.6 to 1.0 part by weight of water per part by weight of flour; maturing this mixture into a dough by allowing the gluten to hydrate fully; subsequently diluting this dough with 0.5 to 3 parts by weight of water per part by weight of flour and either simultaneously or subsequently applying shear to the mixture whereby the gluten agglomerates and subsequently separating the starch and gluten.

2. A method as claimed in claim 1 wherein the amount of water used to dilute the developed dough is from 0.5 to 1.5 parts by weight of water per part by weight of flour.

3. A method as claimed in either claim 1 or claim 2 in which the shear is applied by intense agitation.

4. A method as claimed in either claim 1 or claim 2 in which the shear is applied by pumping the dough together with the diluting water through a narrow orifice.

5. A method as claimed in either claim 1 or claim 2 in which the shear is applied by passing the diluted dough through an homogeniser or a colloid mill.

6. A method as claimed in any one of claims 1 to 5 wherein the dough is held to allow the gluten to hydrate for a period (retention time) of from 10 to 20 minutes.

7. A method as claimed in any one of claims 1 to 6 wherein the agglomerated gluten particles are separated from the starch and other constituents of the flour by screening.

8. A method as claimed in any one of claims 1 to 6 wherein prime starch is separated from agglomerated gluten particles and other constituents of the flour in a decanter.

9. A method as claimed in any one of claims 1 to 6 wherein prime starch is separated from agglomerated gluten particles and other constituents by using a hydrocyclone system, from which the prime starch after countercurrent washing leaves at the underflow and the agglomerated gluten and other constituents from the overflow.

10. A method as claimed in either claim 8 or claim 9 wherein the gluten is subsequently separated from the other constituents of the flour by screening.

11. A method as claimed in any one of claims 1 to 10 wherein after separation from the gluten the starch is washed with water.

12. A method as claimed in any one of claims 1 to 11 wherein the temperature of the water used for dilution of the dough and/or starch washing does not exceed $30^{\circ}$C.

13. A method as claimed in any one of claims 1 to 12 wherein the wheat flour used as a starting material is whole wheat meal.

0010447

FIG. 1

FIG. 2

0010447

FIG. 3

FIG.4

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | <u>US - A - 3 891 613</u> (G.V. RAO; O.B. GERRISH)<br><br>* Claim 1; column 2, lines 43-56; column 3, lines 50-55; column 4, lines 34-65 *<br><br>--<br><br><u>FR - A - 2 362 594</u> (SCHOLTEN-HONIG RESEARCH)<br><br>* Claim 1* | 1-3,7, 10-12<br><br><br><br><br><br>9 | A 23 J 1/12<br>C 13 L 1/00 |

**TECHNICAL FIELDS SEARCHED (Int Cl. )**

A 23 J 1/12
C 13 L 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-01-1980 | PEETERS J |

EPO Form 1503.1 06.78